# EUROPEAN PATENT SPECIFICATION

(11) **EP 3 606 008 B1**
(45) Date of publication and mention of the grant of the patent: **14.12.2022**
(21) Application number: 18774667.2
(22) Date of filing: 12.02.2018
(51) Int. Cl.: H04L 67/1008, G06F 9/50, G06F 9/455

(54) **METHOD AND DEVICE FOR REALIZING RESOURCE SCHEDULING**
VERFAHREN UND VORRICHTUNG ZUR RESSOURCENPLANUNG
PROCÉDÉ ET DISPOSITIF PERMETTANT LA RÉALISATION D'UNE PLANIFICATION DE RESSOURCE

(30) Priority: 27.03.2017 CN 201710188524
(43) Date of publication of application: 05.02.2020
(73) Proprietor: ZTE Corporation, Shenzhen, Guangdong 518057 (CN)
(72) Inventor: TONG, Yao, Shenzhen Guangdong 518057 (CN); SHEN, Guang, Shenzhen Guangdong 518057 (CN)
(74) Representative: Ipsilon
(86) International application number: PCT/CN2018/076386
(87) International publication number: WO 2018/177042

(56) References cited:
- WO-A1-2014/101010
- CN-A- 104 881 325
- CN-A- 105 141 541
- CN-A- 106 534 318
- US-A1- 2013 145 365
- US-A1- 2015 039 764

## Description

### TECHNICAL FIELD

The present disclosure relates to but is not limited to virtualization technologies, and more particularly, to a method and device for realizing resource scheduling.

### BACKGROUND

With the wider application of cloud services, the scale of the server cluster based on the virtualization technology is larger and larger. In a large-scale virtualized cluster environment, the number of virtual machines even reaches tens of thousands. The deployment conditions of the virtual machines in the cluster are crucial to the whole cluster. The resource load conditions of the large-scale cluster are variable, and a system administrator cannot make accurate judgment on the resource load conditions of the current cluster in a short time, and cannot perform scheduling control on numerous virtual machines to fulfill the requirement of resource scheduling. Therefore, more and more technicians are beginning to focus on the dynamic resource scheduling problem in virtualized clusters.

In a virtualized cluster environment, typical resource scheduling scenarios are as follows: 1) the loads of the physical machines are unbalanced, and the resource utilization density is low; 2) the loads of some physical machines are too low, and the resource utilization rate is low; 3) the loads of some physical machines are too high, and the performances of virtual machines on the physical machines are influenced; 4) a request of a virtual machine to be started exists, and a proper placement point needs to be selected. How to effectively meet the requirements of the application scenarios is a crucial problem in the current virtualized cluster management. Therefore, the realization of the dynamic resource scheduling in the large-scale virtualized cluster environment has great significance.

U.S. Patent Application Publication No. US20150039764 discloses system, method and computer program product for energy-efficient and service level agreement (SLA)-based management of data centers for cloud computing, in which improving the utilization of physical resources and reducing energy consumption in a cloud data center includes providing a plurality of virtual machines in the cloud data center; periodically reallocating resources of the plurality of virtual machines according to a current resource demand of the plurality of virtual machines in order to minimize a number of active physical servers required to handle a workload of the physical servers; maximizing a mean inter-migration time between virtual machine migrations under the quality of service requirement based on a Markov chain model; and using a multisize sliding window workload estimation process for a non-stationary workload to maximize the mean inter-migration time.

U.S. Patent Application Publication No. US20130145365A discloses method for managing green power of virtual machine cluster, in which A method for managing green power determines if how many physical machines should run or be shut off with the gross occupied resource weight ratio of the virtual machine cluster. The standby physical machine in the non-running physical machines is elected and woke up to join as one of the running physical machines; one of the running physical machines is elected as a migration physical machine with the virtual machines therein being moved to other running physical machines, and then shut off. The resource allocation process is conducted to distribute loads of the running physical machines such that the total numbers of the running physical machines are capable of being dispatched flexibly to achieve the object of green power management.

### SUMMARY

The following is a summary of the subject matter described in detail herein. This summary is not intended to limit the scope of the claims. The invention is defined by the subject matter defined in appended independent claims 1 and 8.

The embodiments of the present disclosure provide a method and a device for realizing resource scheduling, which can realize resource scheduling of different virtual platforms. The features of the method and the device according to the present invention are defined in the independent claims, and the preferable features according to the present invention are defined in the dependent claims.

An embodiment of the present disclosure provides a method for realizing resource scheduling, which includes the following steps: acquiring performance parameter information of physical machines and virtual machines in a cluster, and parsing and converting the performance parameter information into performance data information in a preset format; determining cluster load information according to the performance data information; selecting a resource scheduling algorithm for resource scheduling from a preset algorithm pool according to the determined cluster load information and a received request configuration; and outputting a resource scheduling decision according to the selected resource scheduling algorithm, and performing resource scheduling on the cluster according to the output resource scheduling decision; wherein the algorithm pool includes two or more resource scheduling algorithms.

Optionally, the acquiring the performance parameter information of the physical machines and the virtual machines in the cluster includes: collecting, by monitoring clients provided in each of the physical machines in advance, the performance parameter information of the physical machines and the virtual machines; acquiring, from the monitoring clients and in a polling manner, the performance parameter information collected by the monitoring clients; and aggregating the performance parameter information of all of the physical machines and the virtual machines acquired in the polling manner; wherein the collected performance parameter information is synchronized in a multicast manner among the monitoring clients.

Optionally, the performance parameter information includes: for each of the physical machines: internet protocol (IP) address, name, unique identifier, total number of central processing units (CPUs), CPU utilization rate, total memory size, memory utilization rate, read/write speed of an input/output (I/O) port of a disk, and virtual machine provided on physical machine; here, the virtual machine provided on physical machine includes virtual machine parameter information such as the number and names of the virtual machines provided; and for each of the virtual machines: name, unique identifier, size of allocated memories, memory utilization rate, number of allocated CPUs, read/write speed of I/O of a disk of the virtual machine, affinity description, mutual exclusion description and status flag.

Optionally, the algorithm pool registers the resource scheduling algorithms respectively through algorithm extension interfaces provided in advance in a one-to-one correspondence.

Optionally, the resource scheduling algorithm includes at least one of a hotspot removal algorithm, an energy-saving integration algorithm, and a load balancing algorithm.

Optionally, in a case where the resource scheduling algorithm includes an energy-saving integration algorithm, the energy-saving integration algorithm includes: when a load of the cluster is smaller than or equal to a preset load threshold, arranging, according to the cluster load information, the physical machines in a sequence based on their loads, adding a preset number of physical machines with the lowest loads in the sequence to a list of physical machines to be powered off, and adding unselected physical machines to a candidate physical machine list; wherein the load includes: CPU utilization rate and/or memory utilization rate; adding all virtual machines in the list of physical machines to be powered off to a to-be-migrated list; for virtual machines in the to-be-migrated list, attempting to place each virtual machine in the to-be-migrated list on a physical machine with the highest load in the candidate physical machine list one by one; if a virtual machine is placed successfully, outputting a migration decision sequence according to position relation of migration, and generating a power-off decision sequence according to the to-be-migrated list; and if it is failed to place the virtual machine, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing the placement attempt of the virtual machine in the to-be-migrated list.

Optionally, in a case where the resource scheduling algorithm includes a load balancing algorithm, the load balancing algorithm includes: when load balance degree of the physical machines in the cluster is smaller than a preset load balance threshold, arranging the physical machines in the cluster in a sequence based on their loads; selecting a physical machine with the highest load, traversing the load balance degree of the physical machines in the cluster when each virtual machine on the physical machine with the highest load is migrated according to the performance data information, determining a virtual machine with an optimal load balance degree to perform migration marking, and deleting the determined virtual machine from the physical machine with the highest load; and calculating the load balance degree when the virtual machine with the migration marking is migrated to each of other physical machines, and migrating the virtual machine to a physical machine with an optimal load balance degree obtained by the calculation.

Optionally, in a case where the resource scheduling algorithm includes a hotspot removal algorithm, the hotspot removal algorithm includes: determining whether a physical machine in the cluster is a hotspot physical machine according to the performance data information and a preset load hotspot threshold; and selecting one or more virtual machines from the hotspot physical machine and migrating the one or more virtual machines to other physical machines in the cluster to reduce the load threshold of the hotspot physical machine.

Optionally, in a case where the resource scheduling algorithm includes a hotspot removal algorithm, the hotspot removal algorithm includes: arranging, according to the performance data information, the physical machines in the cluster in a sequence based on their loads; determining, according to the performance data information, a physical machine with the highest load as a hotspot physical machine, when CPU load of the physical machine with the highest load is larger than a preset CPU load hotspot threshold, or when memory utilization rate of the physical machine with the highest load is larger than a preset memory load hotspot threshold; and arranging, according to the performance data information, virtual machines in the hotspot physical machine in a sequence based on their loads, and migrating a virtual machine with the highest load after the arranging to a physical machine with the lowest load in the cluster.

In another aspect, an embodiment of the present disclosure further provides a device for realizing resource scheduling, including: an acquisition and parsing unit, a determination unit, a selection unit and an output and scheduling unit; wherein the acquisition and parsing unit is configured to acquire performance parameter information of physical machines and virtual machines in a cluster, and parse and convert the performance parameter information into performance data information in a preset format; the determination unit is configured to determine cluster load information according to the performance data information; the selection unit is configured to select a resource scheduling algorithm for resource scheduling from a preset algorithm pool according to the determined cluster load information and a received request configuration; and the output and scheduling unit is configured to output a resource scheduling decision according to the selected resource scheduling algorithm, and perform resource scheduling on the cluster according to the output resource scheduling decision; wherein the algorithm pool includes two or more resource scheduling algorithms.

Optionally, the acquisition and parsing unit is configured to: collect, by monitoring clients provided in each of the physical machine in advance, the performance parameter information of the physical machines and the virtual machines; acquire, from the monitoring client and in a polling manner, the performance parameter information collected by the monitoring clients; aggregate the performance parameter information of all of the physical machines and the virtual machines acquired in the polling manner; parse and convert the aggregated performance parameter information into performance data information in a preset format, wherein the collected performance parameter information is synchronized in a multicast manner among the monitoring clients.

Optionally, the performance parameter information includes: for each of the physical machines: internet protocol (IP) address, name, unique identifier, total number of central processing units (CPUs), CPU utilization rate, total memory size, memory utilization rate, read/write speed of an input/output (I/O) port of a disk, and virtual machine provided on physical machine; here, the virtual machine provided on physical machine includes virtual machine parameter information such as the number and names of the virtual machines provided; and for each of virtual machines: name, unique identifier, number of allocated memories, memory utilization rate, number of allocated CPUs, read/write speed of I/O of a disk of the virtual machine, affinity description, mutual exclusion description and status flag.

Optionally, the device further includes: an registration unit configured to register the resource scheduling algorithms respectively through algorithm extension interfaces provided in advance in one-to-one correspondence.

Optionally, the resource scheduling algorithm includes at least one of a hotspot removal algorithm, an energy-saving integration algorithm, and a load balancing algorithm.

Optionally, in a case where the resource scheduling algorithm includes an energy-saving integration algorithm, the energy-saving integration algorithm includes: when a load of the cluster is smaller than or equal to a preset load threshold, arranging, according to the cluster load information, the physical machines in a sequence based on their loads, adding a preset number of physical machines with the lowest loads in the sequence to a list of physical machines to be powered off, and adding unselected physical machines to a candidate physical machine list; wherein the load includes: CPU utilization rate and/or memory utilization rate; adding all virtual machines in the list of physical machines to be powered off to a to-be-migrated list; for virtual machines in the to-be-migrated list, attempting to place each virtual machine in the to-be-migrated list on a physical machine with the highest load in the candidate physical machine list one by one; if a virtual machine is placed successfully, outputting a migration decision sequence according to position relation of migration, and generating a power-off decision sequence according to the to-be-migrated list; if it is failed to place a virtual machine, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing the placement attempt of the virtual machine in the to-be-migrated list.

Optionally, in a case where the resource scheduling algorithm includes a load balancing algorithm, the load balancing algorithm includes: when load balance degree of the physical machines in the cluster is smaller than a preset load balance threshold, arranging the physical machines in the cluster in a sequence based on their loads; selecting a physical machine with the highest load, traversing the load balance degree of the physical machines in the cluster when each virtual machine on the physical machine with the highest load is migrated according to the performance data information, determining a virtual machine with an optimal load balance degree to perform migration marking, and deleting the determined virtual machine from the physical machine with the highest load; and calculating the load balance degree when the virtual machine with the migration marking is migrated to each of other physical machines, and migrating the virtual machine to a physical machine with an optimal load balance degree obtained by the calculation.

Optionally, in a case where the resource scheduling algorithm includes a hotspot removal algorithm, the hotspot removal algorithm includes: determining whether a physical machine in the cluster is a hotspot physical machine according to the performance data information and a preset load hotspot threshold; and selecting one or more virtual machines from the hotspot physical machine and migrating the one or more virtual machines to other physical machines in the cluster to reduce the load threshold of the hotspot physical machine.

Optionally, in a case where the resource scheduling algorithm includes a hotspot removal algorithm, the hotspot removal algorithm includes: arranging, according to the performance data information, the physical machines in the cluster in a sequence based on their loads; determining, according to the performance data information, a physical machine with the highest load as a hotspot physical machine, when CPU load of a physical machine with the highest load is larger than a preset CPU load hotspot threshold, or when memory utilization rate of the physical machine with the highest load is larger than a preset memory load hotspot threshold; and arranging, according to the performance data information, virtual machines in the hotspot physical machine in a sequence based on their loads and migrating a virtual machine with the highest load after the arranging to a physical machine with the lowest load in the cluster.

The present disclosure includes: acquiring performance parameter information of physical machines and virtual machines in a cluster, and parsing and converting the performance parameter information into performance data information in a preset format; determining cluster load information according to the performance data information; selecting a resource scheduling algorithm for resource scheduling from a preset algorithm pool according to the determined cluster load information and a received request configuration; and outputting a resource scheduling decision according to the selected resource scheduling algorithm, and performing resource scheduling on the cluster according to the output resource scheduling decision; wherein the algorithm pool includes two or more resource scheduling algorithms.. The embodiments of the present disclosure realize the dynamic resource scheduling of different virtual platforms.

Other aspects will become apparent upon reading and understanding the drawings and detailed description.

### BRIEF DESCRIPTION OF DRAWINGS

Fig. 1 is a flowchart of a method for realizing resource scheduling according to an embodiment of the present disclosure;
Fig. 2 is a schematic flowchart illustrating an energy-saving integration algorithm according to an embodiment of the present disclosure;
Fig. 3 is a schematic flowchart illustrating a load balancing algorithm according to an embodiment of the present disclosure;
Fig. 4 is a schematic flowchart illustrating a hotspot removal algorithm according to an embodiment of the present disclosure;
Fig. 5 is a schematic flowchart illustrating a hotspot removal algorithm according to another embodiment of the present disclosure; and
Fig. 6 is a block diagram of a device for realizing resource scheduling according to an embodiment of the present disclosure.

### DETAILED DESCRIPTION

Hereinafter, embodiments of the present disclosure will be described in detail with reference to the accompanying drawings.

Distributed Resource Scheduler (DRS) is a commercial dynamical resource scheduling solution provided by VMware, Inc. The DRS dynamically migrates the virtual machine to a host with a lower load according to the resource load condition of the ESX host, and then turns off the ESX host. The dynamic migration of the virtual machine on different ESX hosts is realized by VMware VMotion, and the migration process is completely transparent to end users. VMware provides a complete set of dynamic resource scheduling solutions, but because such dynamic resource adjustment is limited by the architecture set by VMware itself, it cannot be applied to other virtualization platforms including Xen, which is an open source virtual machine monitor, and Kernel-based Virtual Machine (KVM).

OpenNebula, which is an open source toolbox created for cloud computing, supports the establishment and management of private clouds together with virtualization platforms such as Xen and KVM, and provides Deltacloud (which is a set of open source application programming interface (API) provided by Red Hat, Inc. in September, 2009) adapter to manage the hybrid cloud by cooperating with Amazon Elastic Compute Cloud (EC 2,). As a virtualization management platform, OpenNebula integrates the function of the resource management for internet protocol (IP) of virtual machine networks, image files, memory and central processing unit (CPU) and the like with the function of the statistical management of resource usage of the virtual machines and the like into a whole, and provides a unified operation interface for a cluster administrator. However, OpenNebula is focused on the virtualized cluster management, and the scheduling function of OpenNebula is relatively weak. OpenNebula only provides the initial placement function of the deployment of the virtual machine, and the dynamic resource scheduling cannot be realized.

To sum up, there is no dynamic resource scheduling system applicable to different virtualization platforms at present.

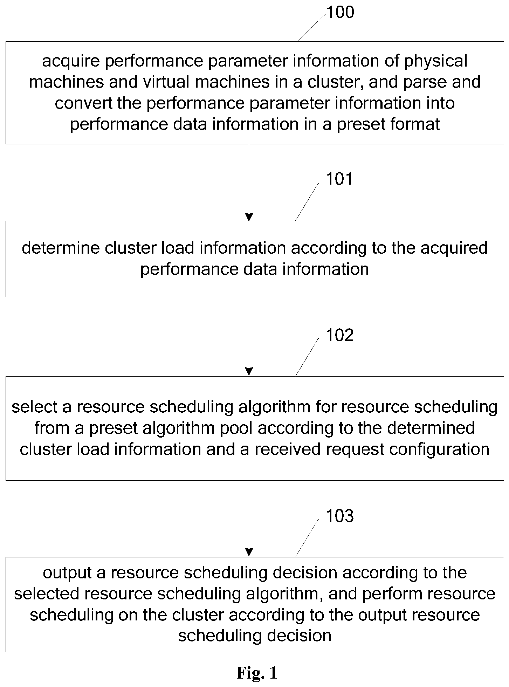

Fig. 1 is a flowchart of a method for realizing resource scheduling according to an embodiment of the present disclosure, and as shown in Fig. 1, the method may include: Step 100, acquiring performance parameter information of physical machines and virtual machines in a cluster, and parsing and converting the performance parameter information into performance data information in a preset format.

Here, the performance data information in the preset format can be compatible with each type of resource scheduling system, and the specific format can be determined according to the format supported by the resource scheduling system.

Optionally, in an embodiment of the present disclosure, the acquiring the performance parameter information of the physical machines and the virtual machines in the cluster includes: collecting, by monitoring clients provided in each of the physical machines in advance, the performance parameter information of the physical machines and the virtual machines; acquiring, from the monitoring clients and in a polling manner , the performance parameter information collected by the monitoring clients; and aggregating the performance parameter information of all of the physical machines and the virtual machines acquired in the polling manner; wherein the collected performance parameter information is synchronized in a multicast manner among the monitoring clients.

Optionally, in an embodiment of the present disclosure, the performance parameter information includes: for each of the physical machines: internet protocol (IP) address, name, unique identifier, total number of central processing units (CPUs), CPU utilization rate, total memory size, memory utilization rate, read/write speed of an input/output (I/O) port of a disk, and virtual machine provided on physical machine; here, the virtual machine provided on physical machine includes virtual machine parameter information such as the number and names of the virtual machines provided; and for each of the virtual machines: name, unique identifier, number of allocated memories, memory utilization rate, number of allocated CPUs, read/write speed of I/O of a disk of the virtual machine, affinity description, mutual exclusion description and status flag.

The method further includes: Step 101, determining cluster load information according to the acquired performance data information; and Step 102, selecting a resource scheduling algorithm for resource scheduling from a preset algorithm pool according to the determined cluster load information and a received request configuration. The algorithm pool includes two or more resource scheduling algorithms.

Optionally, in an embodiment of the present disclosure, the algorithm pool registers the resource scheduling algorithms respectively through algorithm extension interfaces provided in advance in one-to-one correspondence.

According to an embodiment of the present disclosure, more algorithm extension interfaces can be added according to the resource scheduling requirement of the cluster, so that more resource scheduling algorithms can be added.

Optionally, in an embodiment of the present disclosure, the resource scheduling algorithm includes at least one of a hotspot removal algorithm, an energy-saving integration algorithm, and a load balancing algorithm.

It should be noted that the hotspot removal algorithm, the energy-saving integration algorithm, and the load balancing algorithm are optional algorithms in the embodiment of the present disclosure, and according to the embodiment of the present disclosure, a resource scheduling algorithm may be added or deleted according to the resource scheduling requirement of a cluster.

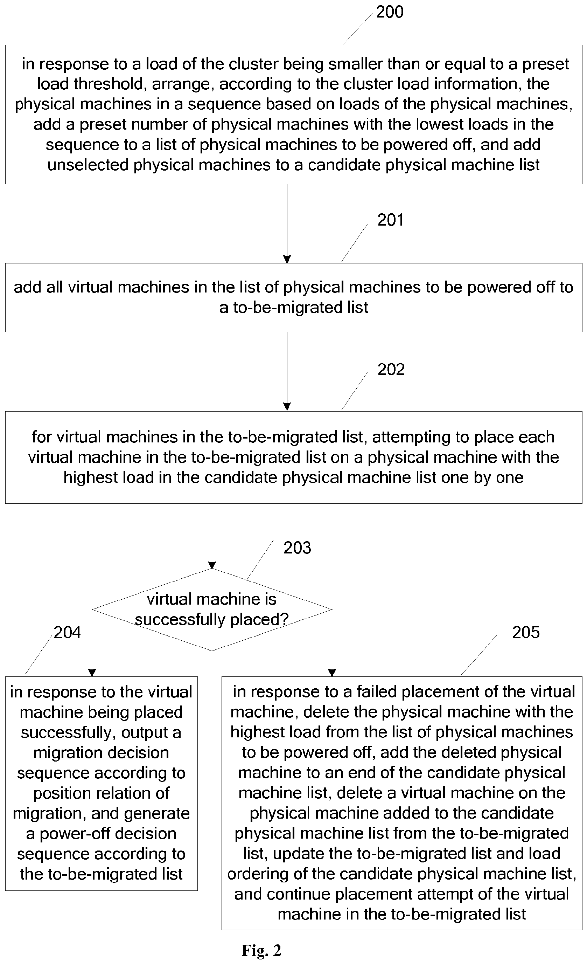

Fig. 2 is a schematic flowchart illustrating an energy-saving integration algorithm according to an embodiment of the present disclosure. Optionally, in a case where the resource scheduling algorithm according to an embodiment of the present disclosure includes an energy-saving integration algorithm, as shown in Fig. 2, the energy-saving integration algorithm includes: Step 200, when a load of the cluster is smaller than or equal to a preset load threshold, arranging, according to the cluster load information, the physical machines in a sequence based on their loads, adding a preset number of physical machines with the lowest loads in the sequence to a list of physical machines to be powered off, and adding unselected physical machines to a candidate physical machine list; wherein the load includes: CPU utilization rate and/or memory utilization rate.

It should be noted that the number of physical machines with the lowest loads that are selected may be determined according to the size of the cluster, and the algorithm may include: selecting three physical machines with the lowest loads.

The energy-saving integration algorithm may further include: Step 201, adding all virtual machines in the list of physical machines to be powered off to a to-be-migrated list; Step 202, for virtual machines in the to-be-migrated list, attempting to place each virtual machine in the to-be-migrated list on a physical machine with the highest load in the candidate physical machine list one by one; Step 203, judging whether the virtual machine is successfully placed or not; if the virtual machine is successfully placed, proceeding to Step 204; and if the placement of the virtual machine fails, proceeding to Step 205; Step 204, outputting a migration decision sequence according to position relation of migration, and generating a power-off decision sequence according to the to-be-migrated list, and ending the process; and Step 205, if the placement of the virtual machine fails, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing the placement attempt of the virtual machine in the to-be-migrated list, and ending the process.

It should be noted that, in the embodiment of the present disclosure, the load may include one or more of CPU load, memory utilization rate, and the like, and when a plurality of loads are included, the physical machines may be arranged in a sequence based on one of the plurality of loads, for example, based on the CPU load only; or, based on the memory utilization rate only, or based on a parameter representing the load, which is obtained by performing calculation on the CPU load and the memory utilization rate according to a calculation formula. For example, the CPU load and the memory utilization rate are respectively used as a half proportion of the parameter representing the load. The load threshold may be determined by those skilled in the art according to the cluster scale, the cluster working state, and the like, and the CPU occupancy rate and the memory occupancy rate may be set with a lower limit of 10% and an upper limit of 90%.

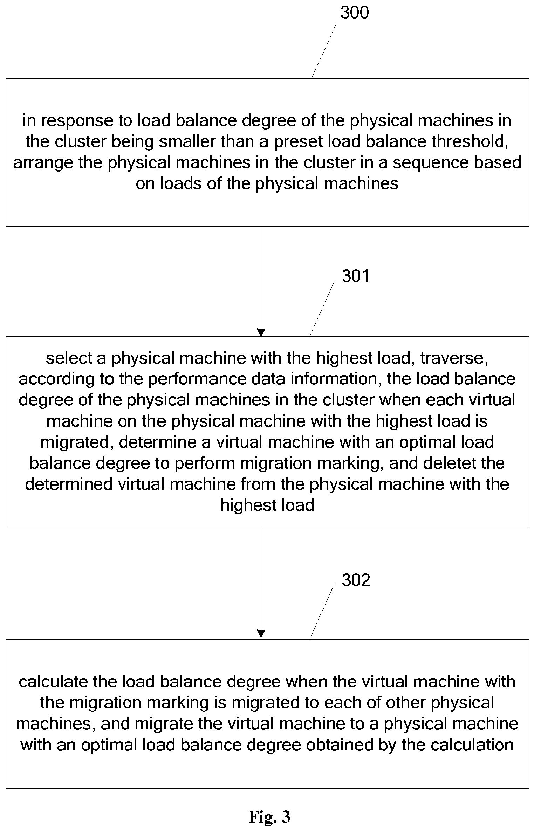

Fig. 3 is a schematic flowchart illustrating a load balancing algorithm according to an embodiment of the present disclosure. Optionally, in a case where the resource scheduling algorithm according to an embodiment of the present disclosure includes a load balancing algorithm, as shown in Fig. 3, the load balancing algorithm includes: Step 300, when load balance degree of the physical machines in the cluster is smaller than a preset load balance threshold, arranging the physical machines in the cluster in a sequence based on their loads; Step 301, selecting a physical machine with the highest load, traversing the load balance degree of the physical machines in the cluster when each virtual machine on the physical machine with the highest load is migrated according to the performance data information, determining a virtual machine with an optimal load balance degree to perform migration marking, and deleting the determined virtual machine from the physical machine with the highest load; and Step 302, calculating the load balance degree when the virtual machine with the migration marking is migrated to each of other physical machines, and migrating the virtual machine to a physical machine with an optimal load balance degree obtained by the calculation.

It should be noted that the load balance degree may include two aspects, one is for the physical machine, and the other is for the virtual machine, and both aspects can be measured from the CPU utilization rate and the memory utilization rate; wherein the physical machine accounts for a weight of 60 percent, and the virtual machine accounts for a weight of 40 percent.

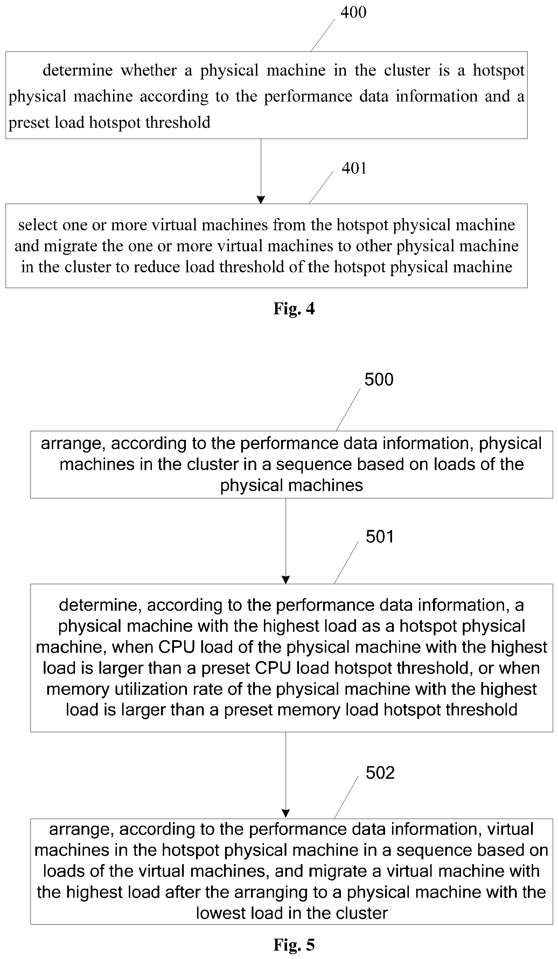

Fig. 4 is a schematic flowchart illustrating a hotspot removal algorithm according to an embodiment of the present disclosure. Optionally, in a case where the resource scheduling algorithm according to an embodiment of the present disclosure includes a hotspot removal algorithm, as shown in Fig. 4, the hotspot removal algorithm includes: Step 400, determining whether a physical machine in the cluster is a hotspot physical machine according to the performance data information and a preset load hotspot threshold; and Step 401, selecting one or more virtual machines from the hotspot physical machine and migrating the one or more virtual machines to other physical machine in the cluster to reduce the load threshold of the hotspot physical machine.

It should be noted that, the load hotspot threshold of the embodiment of the present disclosure may include a load hotspot threshold of memory, a load hotspot threshold of CPU, and the like, which may be set by those skilled in the art according to empirical values.

Fig. 5 is a schematic flowchart illustrating a hotspot removal algorithm according to another embodiment of the present disclosure. Optionally, in a case where the resource scheduling algorithm according to an embodiment of the present disclosure includes a hotspot removal algorithm, as shown in Fig. 5, the hotspot removal algorithm includes: Step 500, arranging, according to the performance data information, the physical machines in the cluster in a sequence based on their loads; Step 501, determining, according to the performance data information, a physical machine with the highest load as a hotspot physical machine, when CPU load of the physical machine with the highest load is larger than a preset CPU load hotspot threshold, or when memory utilization rate of the physical machine with the highest load is larger than a preset memory load hotspot threshold; and Step 502, arranging, according to the performance data information, virtual machines in the hotspot physical machine in a sequence based on their loads, and migrating a virtual machine with the highest load after the arranging to a physical machine with the lowest load in the cluster.

It should be noted that, as long as it is determined that there is a hotspot physical machine, the embodiment of the present disclosure continuously executes the determination process according to the above steps.

The method further includes: Step 103, outputting a resource scheduling decision according to the selected resource scheduling algorithm, and performing resource scheduling on the cluster according to the output resource scheduling decision.

It should be noted that the resource scheduling decision in the embodiment of the present disclosure includes a decision planning process of the resource and a virtual machine control function. The virtual machine control function is mainly to encapsulate an xm command, for example, the format of the xm migration command is: # xm migreate -live -ssl vm_id dest_pm_ip; where the vm_id represents the ID of the virtual machine to be migrated, and dest_pm_ip indicates the IP address of the target physical machine. The parameters -live and -ssl used in the embodiment of the present disclosure indicate that a dynamical migration is performed by using SSL connection, so as to ensure security of the migration.

The present disclosure includes: acquiring performance parameter information of physical machines and virtual machines in a cluster, and parsing and converting the performance parameter information into performance data information in a preset format; determining cluster load information according to the acquired performance data information; selecting a resource scheduling algorithm for resource scheduling from a preset algorithm pool according to the determined cluster load information and a received request configuration; and outputting a resource scheduling decision according to the selected resource scheduling algorithm, and performing resource scheduling on the cluster according to the output resource scheduling decision; wherein the algorithm pool includes two or more resource scheduling algorithms. The embodiments of the present disclosure realize the dynamic resource scheduling of different virtual platforms.

An embodiment of the present disclosure further provides a computer storage medium where a computer executable instruction is stored, and the computer executable instruction is used for the above method for realizing resource scheduling.

An embodiment of the present disclosure further provides a device for realizing resource scheduling, including a memory and a processor.

The processor is configured to execute program instructions in the memory.

The program instructions are read by the processor to perform the following operations: acquiring performance parameter information of physical machines and virtual machines in a cluster, and parsing and converting the performance parameter information into performance data information in a preset format; determining cluster load information according to the acquired performance data information; selecting a resource scheduling algorithm for resource scheduling from a preset algorithm pool according to the determined cluster load information and a received request configuration; and outputting a resource scheduling decision according to the selected resource scheduling algorithm, and performing resource scheduling on the cluster according to the output resource scheduling decision; wherein the algorithm pool includes two or more resource scheduling algorithms.

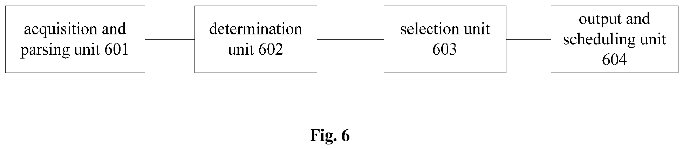

Fig. 6 is a block diagram of a device for realizing resource scheduling according to an embodiment of the present disclosure. As shown in Fig. 6, the device includes: an acquisition and parsing unit 601, a determination unit 602, a selection unit 603 and an output and scheduling unit 604.

The acquisition and parsing unit 601 is configured to acquire performance parameter information of physical machines and virtual machines in a cluster, and parse and convert the performance parameter information into performance data information in a preset format.

Here, the performance data information in the preset format can be compatible with each type of resource scheduling system, and the specific format can be determined according to the format supported by the resource scheduling system.

Optionally, the acquisition and parsing unit 601 in an embodiment of the present disclosure is configured to: collect, by monitoring clients provided in each of the physical machines in advance, the performance parameter information of the physical machines and the virtual machines; acquire, from the monitoring clients and in a polling manner, the performance parameter information collected by the monitoring client; aggregate the performance parameter information of all of the physical machines and the virtual machines acquired in the polling manner; and parse and convert the aggregated performance parameter information into performance data information in a preset format, wherein the acquired performance parameter information is synchronized in a multicast manner among the monitoring clients.

Optionally, in an embodiment of the present disclosure, the performance parameter information includes: for each of the physical machines: internet protocol (IP) address, name, unique identifier, total number of central processing units (CPUs), CPU utilization rate, total memory size, memory utilization rate, read/write speed of an input/output (I/O) port of a disk, and virtual machine provided on physical machine; here, the virtual machine provided on physical machine includes virtual machine parameter information such as the number and names of the virtual machines provided; and for each of the virtual machines: name, unique identifier, number of allocated memories, memory utilization rate, number of allocated CPUs, read/write speed of I/O of a disk of the virtual machine, affinity description, mutual exclusion description and status flag.

The determination unit 602 is configured to determine cluster load information according to the acquired performance data information.

The selection unit 603 is configured to select a resource scheduling algorithm for resource scheduling from a preset algorithm pool according to the determined cluster load information and a received request configuration.

Optionally, in an embodiment of the present disclosure, the resource scheduling algorithm includes at least one of a hotspot removal algorithm, an energy-saving integration algorithm, and a load balancing algorithm.

It should be noted that the hotspot removal algorithm, the energy-saving integration algorithm, and the load balancing algorithm are optional algorithms in the embodiment of the present disclosure, and according to the embodiment of the present disclosure, a resource scheduling algorithm may be added or deleted according to the resource scheduling requirement of a cluster.

Optionally, in a case where the resource scheduling algorithm according to an embodiment of the present disclosure includes an energy-saving integration algorithm, the energy-saving integration algorithm includes: when a load of the cluster is smaller than or equal to a preset load threshold, arranging, according to the cluster load information, the physical machines in a sequence based on their loads, adding a preset number of physical machines with the lowest loads in the sequence to a list of physical machines to be powered off, and adding unselected physical machines to a candidate physical machine list; wherein the load includes: CPU utilization rate and/or memory utilization rate.

It should be noted that the number of physical machines with the lowest loads that are selected may be determined according to the size of the cluster, and the algorithm may include: selecting three physical machines with the lowest loads.

The energy-saving integration algorithm may further includes: adding all virtual machines in the list of physical machines to be powered off to a to-be-migrated list; for virtual machines in the to-be-migrated list, attempting to place each virtual machine in the to-be-migrated list on a physical machine with the highest load in the candidate physical machine list one by one; if the virtual machine is successfully placed, outputting a migration decision sequence according to position relation of migration, and generating a power-off decision sequence according to the to-be-migrated list; and if the placement of the virtual machine fails, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing the placement attempt of the virtual machine in the to-be-migrated list.

It should be noted that, in the embodiment of the present disclosure, the load may include one or more of CPU load, memory utilization rate, and the like, and when a plurality of loads are included, the physical machines may be arranged in a sequence based on one of the plurality of loads, for example, based on the CPU load only; or, based on the memory utilization rate only, or based on a parameter representing the load, which is obtained by performing calculation on the CPU load and the memory utilization rate according to a calculation formula. For example, the CPU load and the memory utilization rate are respectively used as a half proportion of the parameter representing the load. The load threshold may be determined by those skilled in the art according to the cluster scale, the cluster working state, and the like, and the CPU occupancy rate and the memory occupancy rate may be set with a lower limit of 10% and an upper limit of 90%.

Optionally, in a case where the resource scheduling algorithm according to an embodiment of the present disclosure includes a load balancing algorithm, the load balancing algorithm includes: when load balance degree of the physical machines in the cluster is smaller than a preset load balance threshold, arranging the physical machines in the cluster in a sequence based on their loads; selecting a physical machine with the highest load, traversing the load balance degree of the physical machines in the cluster when each virtual machine on the physical machine with the highest load is migrated according to the performance data information, determining a virtual machine with an optimal load balance degree to perform migration marking, and deleting the determined virtual machine from the physical machine with the highest load; and calculating the load balance degree when the virtual machine with the migration marking is migrated to each of other physical machines, and migrating the virtual machine to a physical machine with an optimal load balance degree obtained by the calculation.

It should be noted that the load balance degree may include two aspects, one is for the physical machine, and the other is for the virtual machine, and both aspects can be measured from the CPU utilization rate and the memory utilization rate; wherein the physical machine accounts for a weight of 60 percent, and the virtual machine accounts for a weight of 40 percent.

Optionally, in a case the resource scheduling algorithm according to an embodiment of the present disclosure includes a hotspot removal algorithm, the hotspot removal algorithm includes: determining whether a physical machine in the cluster is a hotspot physical machine according to the performance data information and a preset load hotspot threshold; and selecting one or more virtual machines from the hotspot physical machine and migrating the one or more virtual machines to other physical machines in the cluster to reduce the load threshold of the hotspot physical machine.

It should be noted that, the load hotspot threshold of the embodiment of the present disclosure may include a load hotspot threshold of memory, a load hotspot threshold of CPU, and the like, which may be set by those skilled in the art according to empirical values.

Optionally, in a case the resource scheduling algorithm according to an embodiment of the present disclosure includes a hotspot removal algorithm, the hotspot removal algorithm includes: arranging, according to the performance data information, the physical machines in the cluster in a sequence based on their loads; determining, according to the performance data information, a physical machine with the highest load as a hotspot physical machine, when CPU load of the physical machine with the highest load is larger than a preset CPU load hotspot threshold, or when memory utilization rate of the physical machine with the highest load is larger than a preset memory load hotspot threshold; and arranging, according to the performance data information, virtual machines in the hotspot physical machine in a sequence based on their loads, and migrating a virtual machine with the highest load after the arranging to a physical machine with the lowest load in the cluster.

It should be noted that, as long as it is determined that there is a hotspot physical machine, the embodiment of the present disclosure continuously executes the determination process according to the above steps.

The output and scheduling unit 604 is configured to output a resource scheduling decision according to the selected resource scheduling algorithm, and perform resource scheduling on the cluster according to the output resource scheduling decision. The algorithm pool includes two or more resource scheduling algorithms.

It should be noted that the resource scheduling decision in the embodiment of the present disclosure includes a decision planning process of the resource and a virtual machine control function. The virtual machine control function is mainly to encapsulate an xm command, for example, the format of the xm migration command is: # xm migreate -live -ssl vm_id dest_pm_ip; where the vm_id represents the ID of the virtual machine to be migrated, and dest_pm_ip indicates the IP address of the target physical machine. The parameters -live and -ssl used in the embodiment of the present disclosure indicate that a dynamical migration is performed by using SSL connection, so as to ensure security of the migration.

Optionally, the device according to an embodiment of the present disclosure further includes an registration unit configured to register the resource scheduling algorithms respectively through algorithm extension interfaces provided in advance in one-to-one correspondence.

According to an embodiment of the present disclosure, more algorithm extension interfaces can be added according to the resource scheduling requirement of the cluster, so that more resource scheduling algorithms can be added.

It will be appreciated by those of ordinary skill in the art that all or some of the steps of the methods, systems, functional modules/units in the devices disclosed above may be implemented as software, firmware, hardware, and appropriate combinations thereof. In a hardware implementation, the division between functional modules/units mentioned in the above description does not necessarily correspond to the division of physical units; for example, one physical component may have multiple functions, or one function or step may be performed by several physical components in cooperation. Some or all of the components may be implemented as software executed by a processor, such as a digital signal processor or microprocessor, or as hardware, or as an integrated circuit, such as an application specific integrated circuit. Such software may be distributed on computer-readable medium, which may include computer storage medium (or non-transitory medium) and communication medium (or transitory medium). As is known to those of ordinary skill in the art, the term "computer storage medium" includes volatile and nonvolatile, removable and non-removable medium implemented in any method or technology for storage of information such as computer readable instructions, data structures, program modules or other data. Computer storage medium includes, but is not limited to, RAM, ROM, EEPROM, flash memory or other memory technology, CD-ROM, Digital Versatile Disk (DVD) or other optical disk storage, magnetic cassettes, magnetic tape, magnetic disk storage or other magnetic storage devices, or any other medium which can be used to store the desired information and which can be accessed by a computer. Further, communication medium typically embodies computer readable instructions, data structures, program modules or other data in a modulated data signal such as a carrier wave or other transport mechanism and may include any information delivery medium, as is known to those skilled in the art.

### Industrial applicability

The embodiments of the present disclosure realize the dynamic resource scheduling of different virtualization platforms.

## Claims

1. A method for realizing resource scheduling, comprising:
acquiring performance parameter information of physical machines and virtual machines in a cluster, and parsing and converting the performance parameter information into performance data information in a preset format (100), wherein the performance data information in the preset format is compatible with multiple types of resource scheduling systems;
determining cluster load information according to the performance data information (101);
selecting a resource scheduling algorithm for resource scheduling from a preset algorithm pool according to the determined cluster load information and a received request configuration (102); and
outputting a resource scheduling decision according to the selected resource scheduling algorithm, and performing resource scheduling on the cluster according to the output resource scheduling decision (103);
wherein the algorithm pool comprises two or more resource scheduling algorithms,
wherein the resource scheduling algorithm comprises at least one of a hotspot removal algorithm, an energy-saving integration algorithm and a load balancing algorithm;
wherein in a case where the resource scheduling algorithm comprises an energy-saving integration algorithm, the energy-saving integration algorithm comprises:
in response to a load of the cluster being smaller than or equal to a preset load threshold, arranging, according to the cluster load information, the physical machines in a sequence based on loads of the physical machines, selecting a preset number of physical machines with the lowest loads in the sequence, adding the selected physical machines to a list of physical machines to be powered off, and adding unselected physical machines to a candidate physical machine list (200); wherein the load comprises: CPU utilization rate and/or memory utilization rate;
adding all virtual machines in the list of physical machines to be powered off to a to-be-migrated list (201);
for virtual machines in the to-be-migrated list, attempting to place each virtual machine in the to-be-migrated list on a physical machine with the highest load in the candidate physical machine list one by one (202);
in response to a successful placement of the virtual machine, outputting a migration decision sequence according to position relation of migration, and generating a power-off decision sequence according to the to-be-migrated list (204); and
in response to a failed placement of the virtual machine, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing placement attempt of the virtual machine in the to-be-migrated list (205).

2. The method of claim 1, wherein the acquiring the performance parameter information of the physical machines and the virtual machines in the cluster (100) comprises:
collecting, by monitoring clients provided in each of physical machines in advance, the performance parameter information of the physical machines and the virtual machines;
acquiring, from the monitoring clients and in a polling manner , the performance parameter information collected by the monitoring clients; and
aggregating the performance parameter information of all of the physical machines and the virtual machines acquired in the polling manner;
wherein the collected performance parameter information is synchronized in a multicast manner among the monitoring clients.

3. The method of claim 2, wherein the performance parameter information comprises:
for each of the physical machines: internet protocol, IP, address, name, unique identifier, total number of central processing units, CPUs, CPU utilization rate, total memory size, memory utilization rate, read/write speed of an input/output, I/O, port of a disk, and virtual machine provided on physical machine; wherein the virtual machine provided on physical machine comprises number and names of virtual machines provided; and
for each of the virtual machines: name, unique identifier, number of allocated memories, memory utilization rate, number of allocated CPUs, read/write speed of I/O of a disk of the virtual machine, affinity description, mutual exclusion description and status flag.

4. The method of claim 1, wherein the algorithm pool registers resource scheduling algorithms respectively through algorithm extension interfaces provided in advance in a one-to-one correspondence.

5. The method of any one of claims 1 to 4, wherein in a case where the resource scheduling algorithm comprises a load balancing algorithm, the load balancing algorithm comprises:
in response to load balance degree of the physical machines in the cluster being smaller than a preset load balance threshold, arranging the physical machines in the cluster in a sequence based on loads of the physical machines (300);
selecting a physical machine with the highest load, traversing, according to the performance data information, the load balance degree of the physical machines in the cluster when each virtual machine on the physical machine with the highest load is migrated, determining a virtual machine with an optimal load balance degree to perform migration marking, and deleting the determined virtual machine from the physical machine with the highest load (301); and
calculating the load balance degree when the virtual machine with the migration marking is migrated to each of other physical machines, and migrating the virtual machine to a physical machine with an optimal load balance degree obtained by the calculation (302).

6. The method of any one of claims 1 to 4, wherein in a case where the resource scheduling algorithm comprises a hotspot removal algorithm, the hotspot removal algorithm comprises:
determining whether a physical machine in the cluster is a hotspot physical machine according to the performance data information and a preset load hotspot threshold (400); and
selecting one or more virtual machines from the hotspot physical machine and migrating the one or more virtual machines to other physical machine in the cluster to reduce load threshold of the hotspot physical machine (401).

7. The method of any one of claims 1 to 4, wherein in a case where the resource scheduling algorithm comprises a hotspot removal algorithm, the hotspot removal algorithm comprises:
arranging, according to the performance data information, the physical machines in the cluster in a sequence based on loads of the physical machines (500);
determining, according to the performance data information, a physical machine with the highest load as a hotspot physical machine, when CPU load of the physical machine with the highest load is larger than a preset CPU load hotspot threshold, or when memory utilization rate of the physical machine with the highest load is larger than a preset memory load hotspot threshold (501); and
arranging, according to the performance data information, virtual machines in the hotspot physical machine in a sequence based on loads of the virtual machines, and migrating a virtual machine with the highest load after the arranging to a physical machine with the lowest load in the cluster (502).

8. An device for realizing resource scheduling, comprising: an acquisition and parsing unit (601), a determination unit (602), a selection unit (603) and an output and scheduling unit (604); wherein
the acquisition and parsing unit (601) is configured to acquire performance parameter information of physical machines and virtual machines in a cluster, and parse and convert the performance parameter information into performance data information in a preset format, wherein the performance data information in the preset format is compatible with multiple types of resource scheduling systems;
the determination unit (602) is configured to determine cluster load information according to the performance data information;
the selection unit (603) is configured to select a resource scheduling algorithm for resource scheduling from a preset algorithm pool according to the determined cluster load information and a received request configuration; and
the output and scheduling unit (604) is configured to output a resource scheduling decision according to the selected resource scheduling algorithm, and perform resource scheduling on the cluster according to the output resource scheduling decision;
wherein the algorithm pool comprises two or more resource scheduling algorithms;
wherein the resource scheduling algorithm comprises at least one of a hotspot removal algorithm, an energy-saving integration algorithm and a load balancing algorithm;
wherein in a case where the resource scheduling algorithm comprises an energy-saving integration algorithm, the energy-saving integration algorithm comprises:
in response to a load of the cluster being smaller than or equal to a preset load threshold, arranging, according to the cluster load information, the physical machines in a sequence based on loads of the physical machines, selecting a preset number of physical machines with the lowest loads in the sequence, adding the selected physical machines to a list of physical machines to be powered off, and adding unselected physical machines to a candidate physical machine list; wherein the load comprises: CPU utilization rate and/or memory utilization rate;
adding all virtual machines in the list of physical machines to be powered off to a to-be-migrated list;
for virtual machines in the to-be-migrated list, attempting to place each virtual machine in the to-be-migrated list on a physical machine with the highest load in the candidate physical machine list one by one;
in response to a successful placement of the virtual machine, outputting a migration decision sequence according to position relation of migration, and generating a power-off decision sequence according to the to-be-migrated list;
in response to a failed placement of the virtual machine, deleting the physical machine with the highest load from the list of physical machines to be powered off, adding the deleted physical machine to an end of the candidate physical machine list, deleting a virtual machine on the physical machine added to the candidate physical machine list from the to-be-migrated list, updating the to-be-migrated list and load ordering of the candidate physical machine list, and continuing placement attempt of the virtual machine in the to-be-migrated list.

9. The device of claim 8, wherein the acquisition and parsing unit (601) is configured to:
collect, by monitoring clients provided on each of the physical machines in advance, the performance parameter information of the physical machines and the virtual machines;
acquire, from the monitoring clients and in a polling manner , the performance parameter information collected by the monitoring client;
aggregate the performance parameter information of all of the physical machines and the virtual machines acquired in the polling manner; and
parse and convert the aggregated performance parameter information into performance data information in a preset format,
wherein the collected performance parameter information is synchronized in a multicast manner among the monitoring clients.

10. The device of claim 9, wherein the performance parameter information comprises:
for each of the physical machine: internet protocol, IP, address, name, unique identifier, total number of central processing units, CPUs, CPU utilization rate, total memory size, memory utilization rate, read/write speed of an input/output, I/O, port of a disk, and virtual machine provided on physical machine; wherein the virtual machine provided on physical machine comprises number and names of virtual machines provided; and
for each of the virtual machines: name, unique identifier, number of allocated memories, memory utilization rate, number of allocated CPUs, read/write speed of I/O of a disk of the virtual machine, affinity description, mutual exclusion description and status flag.

11. The device of claim 8, further comprising:
an registration unit configured to register resource scheduling algorithms respectively through algorithm extension interfaces provided in advance in one-to-one correspondence.

12. The device of any one of claims 8 to 11, wherein in a case where the resource scheduling algorithm comprises a load balancing algorithm, the load balancing algorithm comprises:
in response to load balance degree of the physical machines in the cluster being smaller than a preset load balance threshold, arranging the physical machines in the cluster in a sequence based on loads of the physical machines;
selecting a physical machine with the highest load, traversing, according to the performance data information, the load balance degree of the physical machines in the cluster when each virtual machine on the physical machine with the highest load is migrated, determining a virtual machine with an optimal load balance degree to perform migration marking, and deleting the determined virtual machine from the physical machine with the highest load; and
calculating the load balance degree when the virtual machine with the migration marking is migrated to each of other physical machines, and migrating the virtual machine to a physical machine with an optimal load balance degree obtained by the calculation,
wherein in a case where the resource scheduling algorithm comprises a hotspot removal algorithm, the hotspot removal algorithm comprises:
determining whether a physical machine in the cluster is a hotspot physical machine according to the performance data information and a preset load hotspot threshold; and
selecting one or more virtual machines from the hotspot physical machine and migrating the one or more virtual machines to other physical machine in the cluster to reduce load threshold of the hotspot physical machine,
wherein in a case where the resource scheduling algorithm comprises a hotspot removal algorithm, the hotspot removal algorithm comprises:
arranging, according to the performance data information, the physical machines in the cluster in a sequence based on loads of the physical machines;
determining, according to the performance data information, a physical machine with the highest load as a hotspot physical machine, when CPU load of the physical machine with the highest load is larger than a preset CPU load hotspot threshold, or when memory utilization rate of the physical machine with the highest load is larger than a preset memory load hotspot threshold; and
arranging, according to the performance data information, virtual machines in the hotspot physical machine in a sequence based on loads of the virtual machines, and migrating a virtual machine with the highest load after the arranging to a physical machine with the lowest load in the cluster.

## Patentansprüche

1. Verfahren zur Durchführung von Ressourcenplanung, umfassend:
Abrufen von Leistungsparameterinformationen von physischen Maschinen und virtuellen Maschinen in einem Cluster und Parsen und Konvertieren der Leistungsparameterinformationen in Leistungsdateninformationen in einem voreingestellten Format (100), wobei die Leistungsdateninformationen im voreingestellten Format mit mehreren Typen von Ressourcenplanungssystemen kompatibel sind;
Bestimmen von Cluster-Lastinformationen gemäß den Leistungsdateninformationen (101);
Auswählen eines Ressourcenplanungsalgorithmus für Ressourcenplanung aus einem voreingestellten Algorithmenpool gemäß den bestimmten Cluster-Lastinformationen und einer empfangenen Anforderungskonfiguration (102); und
Ausgeben einer Ressourcenplanungsentscheidung gemäß dem ausgewählten Ressourcenplanungsalgorithmus und Durchführen von Ressourcenplanung am Cluster gemäß der ausgegebenen Ressourcenplanungsentscheidung (103);
wobei der Algorithmenpool zwei oder mehr Ressourcenplanungsalgorithmen umfasst,
wobei der Ressourcenplanungsalgorithmus mindestens einen von einem Hotspot-Entfernungsalgorithmus, einem Energiespar-Integrationsalgorithmus und einem Lastausgleichsalgorithmus umfasst;
wobei, falls der Ressourcenplanungsalgorithmus einen Energiespar-Integrationsalgorithmus umfasst, der Energiespar-Integrationsalgorithmus umfasst:
in Reaktion darauf, dass eine Last des Clusters kleiner als oder gleich wie eine voreingestellte Lastschwelle ist, Anordnen der physischen Maschinen gemäß den Cluster-Lastinformationen in einer Folge basierend auf Lasten der physischen Maschinen, Auswählen einer voreingestellten Anzahl von physischen Maschinen mit den niedrigsten Lasten in der Folge, Hinzufügen der ausgewählten physischen Maschinen zu einer Liste von physischen Maschinen, die ausgeschaltet werden sollen, und Hinzufügen von nicht ausgewählten physischen Maschinen zu einer Liste von in Frage kommenden physischen Maschinen (200); wobei die Last umfasst: CPU-Nutzungsrate und/oder Speichernutzungsrate;
Hinzufügen aller virtuellen Maschinen in der Liste von physischen Maschinen, die ausgeschaltet werden sollen, zu einer Zu-migrieren-Liste (201);
Versuchen für virtuelle Maschinen in der Zu-migrieren-Liste, jede virtuelle Maschine in der Zu-migrieren-Liste eine nach der anderen auf einer physischen Maschine mit der höchsten Last in der Liste von in Frage kommenden physischen Maschinen zu platzieren (202);
Ausgeben einer Migrationsentscheidungsfolge gemäß einer Positionsbeziehung von Migration und Erzeugen einer Ausschaltentscheidungsfolge gemäß der Zu-migrieren-Liste in Reaktion auf eine erfolgreiche Platzierung der virtuellen Maschine (204); und
in Reaktion auf eine fehlgeschlagene Platzierung der virtuellen Maschine Löschen der physischen Maschine mit der höchsten Last aus der Liste von physischen Maschinen, die ausgeschaltet werden sollen, Hinzufügen der gelöschten physischen Maschine zu einem Ende der Liste von in Frage kommenden physischen Maschinen, Löschen einer virtuellen Maschine auf der zur Liste von in Frage kommenden physischen Maschinen hinzugefügten physischen Maschine aus der Zu-migrieren-Liste, Aktualisieren der Zu-migrieren-Liste und Ordnen der Liste von in Frage kommenden physischen Maschinen nach Last und Fortfahren mit dem Versuch des Platzierens der virtuellen Maschine in der Zu-migrieren-Liste (205).

2. Verfahren nach Anspruch 1, wobei das Abrufen der Leistungsparameterinformationen der physischen Maschinen und der virtuellen Maschinen im Cluster (100) umfasst:
Sammeln der Leistungsparameterinformationen der physischen Maschinen und der virtuellen Maschinen durch Überwachungsclients, die in jeder der physischen Maschinen im Voraus bereitgestellt werden;
Abrufen der durch die Überwachungsclients gesammelten Leistungsparameterinformationen von den Überwachungsclients und durch Abfragen; und
Aggregieren der in der durch Abfragen abgerufenen Leistungsparameterinformationen von allen der physischen Maschinen und der virtuellen Maschinen;
wobei die gesammelten Leistungsparameterinformationen per Multicast unter den Überwachungsclients synchronisiert werden.

3. Verfahren nach Anspruch 2, wobei die Leistungsparameterinformationen umfassen:
für jede der physischen Maschinen: Internetprotokoll-,IP-,Adresse, Name, eindeutige Kennung, Gesamtanzahl von zentralen Verarbeitungseinheiten, CPUs, CPU-Nutzungsrate, Gesamtspeichergröße, Speichernutzungsrate, Lese-/Schreibgeschwindigkeit eines Eingabe-/Ausgabe-,E-/A-,Ports einer Disk und auf der physischen Maschine bereitgestellte virtuelle Maschine; wobei die auf der physischen Maschine bereitgestellte virtuelle Maschine Anzahl und Namen von bereitgestellten virtuellen Maschinen umfasst; und
für jede der virtuellen Maschinen: Name, eindeutige Kennung, Anzahl von zugewiesenen Speichern, Speichernutzungsrate, Anzahl von zugewiesenen CPUs, Lese-/Schreibgeschwindigkeit von E/A einer Disk der virtuellen Maschine, Affinitätsbeschreibung, Beschreibung gegenseitigen Ausschlusses und Statusflag.

4. Verfahren nach Anspruch 1, wobei der Algorithmenpool Ressourcenplanungsalgorithmen jeweils durch Algorithmuserweiterungsschnittstellen registriert, die im Voraus in einer Eins-zu-eins-Entsprechung bereitgestellt werden.

5. Verfahren nach einem der Ansprüche 1 bis 4, wobei, falls der Ressourcenplanungsalgorithmus einen Lastausgleichsalgorithmus umfasst, der Lastausgleichsalgorithmus umfasst:
Anordnen der physischen Maschinen im Cluster in einer Folge basierend auf Lasten der physischen Maschinen in Reaktion darauf, dass ein Lastausgleichsgrad der physischen Maschinen im Cluster kleiner als eine voreingestellte Lastausgleichsschwelle ist (300);
Auswählen einer physischen Maschine mit der höchsten Last, Durchlaufen des Lastausgleichsgrades der physischen Maschinen im Cluster gemäß den Leistungsdateninformationen, wenn jede virtuelle Maschine auf der physischen Maschine mit der höchsten Last migriert wird, Bestimmen einer virtuellen Maschine mit einem optimalen Lastausgleichsgrad zum Durchführen von Migrationsmarkierung und Löschen der bestimmten virtuellen Maschine aus der physischen Maschine mit der höchsten Last (301); und
Berechnen des Lastausgleichsgrades, wenn die virtuelle Maschine mit der Migrationsmarkierung zu jeder von anderen physischen Maschinen migriert wird, und Migrieren der virtuellen Maschine zu einer physischen Maschine mit einem durch die Berechnung erhaltenen optimalen Lastausgleichsgrad (302).

6. Verfahren nach einem Ansprüche 1 bis 4, wobei, falls der Ressourcenplanungsalgorithmus einen Hotspot-Entfernungsalgorithmus umfasst, der Hotspot-Entfernungsalgorithmus umfasst:
Bestimmen, ob eine physische Maschine im Cluster eine physische Hotspot-Maschine ist, gemäß den Leistungsdateninformationen und einer voreingestellten Last-Hotspot-Schwelle (400); und
Auswählen einer oder mehrerer virtueller Maschinen aus der physischen Hotspot-Maschine und Migrieren der einen oder der mehreren virtuellen Maschinen zu einer anderen physischen Maschine im Cluster, um die Lastschwelle der physischen Hotspot-Maschine zu reduzieren (401).

7. Verfahren nach einem Ansprüche 1 bis 4, wobei, falls der Ressourcenplanungsalgorithmus einen Hotspot-Entfernungsalgorithmus umfasst, der Hotspot-Entfernungsalgorithmus umfasst:
Anordnen der physischen Maschinen im Cluster gemäß den Leistungsdateninformationen in einer Folge basierend auf Lasten der physischen Maschinen (500);
Bestimmen einer physischen Maschine mit der höchsten Last gemäß den Leistungsdateninformationen als eine physische Hotspot-Maschine, wenn eine CPU-Last der physischen Maschine mit der höchsten Last größer als eine voreingestellte CPU-Last-Hotspot-Schwelle ist oder wenn die Speichernutzungsrate der physischen Maschine mit der höchsten Last größer als eine voreingestellte Speicherlast-Hotspot-Schwelle ist (501); und
Anordnen von virtuellen Maschinen in der physischen Hotspot-Maschine gemäß den Leistungsdateninformationen einer Folge basierend auf Lasten der virtuellen Maschinen und Migrieren einer virtuellen Maschine mit der höchsten Last nach dem Anordnen zu einer physischen Maschine mit der niedrigsten Last im Cluster (502).

8. Vorrichtung zum Durchführen von Ressourcenplanung, umfassend: eine Abruf- und Parseinheit (601), eine Bestimmungseinheit (602), eine Auswahleinheit (603) und eine Ausgabe- und Planungseinheit (604); wobei
die Abruf- und Parseinheit (601) zum Abrufen von Leistungsparameterinformationen von physischen Maschinen und virtuellen Maschinen in einem Cluster und Parsen und Konvertieren der Leistungsparameterinformationen in Leistungsdateninformationen in einem voreingestellten Format konfiguriert ist, wobei die Leistungsdateninformationen im voreingestellten Format mit mehreren Typen von Ressourcenplanungssystemen kompatibel sind;
die Bestimmungseinheit (602) zum Bestimmen von Cluster-Lastinformationen gemäß den Leistungsdateninformationen konfiguriert ist;
die Auswahleinheit (603) zum Auswählen eines Ressourcenplanungsalgorithmus für Ressourcenplanung aus einem voreingestellten Algorithmenpool gemäß den bestimmten Cluster-Lastinformationen und einer empfangenen Anforderungskonfiguration konfiguriert ist; und
die Ausgabe- und Planungseinheit (604) zum Ausgeben einer Ressourcenplanungsentscheidung gemäß dem ausgewählten Ressourcenplanungsalgorithmus und Durchführen von Ressourcenplanung am Cluster gemäß der ausgegebenen Ressourcenplanungsentscheidung konfiguriert ist;
wobei der Algorithmenpool zwei oder mehr Ressourcenplanungsalgorithmen umfasst;
wobei der Ressourcenplanungsalgorithmus mindestens einen von einem Hotspot-Entfernungsalgorithmus, einem Energiespar-Integrationsalgorithmus und einem Lastausgleichsalgorithmus umfasst;
wobei, falls der Ressourcenplanungsalgorithmus einen Energiespar-Integrationsalgorithmus umfasst, der Energiespar-Integrationsalgorithmus umfasst:
in Reaktion darauf, dass eine Last des Clusters kleiner als oder gleich wie eine voreingestellte Lastschwelle ist, Anordnen der physischen Maschinen gemäß den Cluster-Lastinformationen in einer Folge basierend auf Lasten der physischen Maschinen, Auswählen einer voreingestellten Anzahl von physischen Maschinen mit den niedrigsten Lasten in der Folge, Hinzufügen der ausgewählten physischen Maschinen zu einer Liste von physischen Maschinen, die ausgeschaltet werden sollen, und Hinzufügen von nicht ausgewählten physischen Maschinen zu einer Liste von in Frage kommenden physischen Maschinen; wobei die Last umfasst: CPU-Nutzungsrate und/oder Speichernutzungsrate;
Hinzufügen aller virtuellen Maschinen in der Liste von physischen Maschinen, die ausgeschaltet werden sollen, zu einer Zu-migrieren-Liste;
Versuchen für virtuelle Maschinen in der Zu-migrieren-Liste, jede virtuelle Maschine in der Zu-migrieren-Liste eine nach der anderen auf einer physischen Maschine mit der höchsten Last in der Liste von in Frage kommenden physischen Maschinen zu platzieren;
Ausgeben einer Migrationsentscheidungsfolge gemäß einer Positionsbeziehung von Migration und Erzeugen einer Ausschaltentscheidungsfolge gemäß der Zu-migrieren-Liste in Reaktion auf eine erfolgreiche Platzierung der virtuellen Maschine;
in Reaktion auf eine fehlgeschlagene Platzierung der virtuellen Maschine Löschen der physischen Maschine mit der höchsten Last aus der Liste von physischen Maschinen, die ausgeschaltet werden sollen, Hinzufügen der gelöschten physischen Maschine zu einem Ende der Liste von in Frage kommenden physischen Maschinen, Löschen einer virtuellen Maschine auf der zur Liste von in Frage kommenden physischen Maschinen hinzugefügten physischen Maschine aus der Zu-migrieren-Liste, Aktualisieren der Zu-migrieren-Liste und Ordnen der Liste von in Frage kommenden physischen Maschinen nach Last und Fortfahren mit dem Versuch des Platzierens der virtuellen Maschine in der Zu-migrieren-Liste.

9. Vorrichtung nach Anspruch 8, wobei die Abruf- und Parseinheit (601) konfiguriert ist zum:
Sammeln der Leistungsparameterinformationen der physischen Maschinen und der virtuellen Maschinen durch Überwachungsclients, die auf jeder der physischen Maschinen im Voraus bereitgestellt werden;
Abrufen der durch die Überwachungsclients gesammelten Leistungsparameterinformationen von den Überwachungsclients und durch Abfragen; und
Aggregieren der in der durch Abfragen abgerufenen Leistungsparameterinformationen von allen der physischen Maschinen und der virtuellen Maschinen; und
Parsen und Konvertieren der aggregierten Leistungsparameterinformationen in Leistungsdateninformationen in einem voreingestellten Format,
wobei die gesammelten Leistungsparameterinformationen per Multicast unter den Überwachungsclients synchronisiert werden.

10. Vorrichtung nach Anspruch 9, wobei die Leistungsparameterinformationen umfassen:
für jede der physischen Maschinen: Internetprotokoll-,IP-,Adresse, Name, eindeutige Kennung, Gesamtanzahl von zentralen Verarbeitungseinheiten, CPUs, CPU-Nutzungsrate, Gesamtspeichergröße, Speichernutzungsrate, Lese-/Schreibgeschwindigkeit eines Eingabe-/Ausgabe-,E-/A-,Ports einer Disk und auf der physischen Maschine bereitgestellte virtuelle Maschine; wobei die auf der physischen Maschine bereitgestellte virtuelle Maschine Anzahl und Namen von bereitgestellten virtuellen Maschinen umfasst; und
für jede der virtuellen Maschinen: Name, eindeutige Kennung, Anzahl von zugewiesenen Speichern, Speichernutzungsrate, Anzahl von zugewiesenen CPUs, Lese-/Schreibgeschwindigkeit von E/A einer Disk der virtuellen Maschine, Affinitätsbeschreibung, Beschreibung gegenseitigen Ausschlusses und Statusflag.

11. Vorrichtung nach Anspruch 8, ferner umfassend:
eine Registriereinheit, die so konfiguriert ist, dass sie Ressourcenplanungsalgorithmen jeweils durch Algorithmuserweiterungsschnittstellen registriert, die im Voraus in einer Eins-zu-eins-Entsprechung bereitgestellt werden.

12. Vorrichtung nach einem der Ansprüche 8 bis 11, wobei, falls der Ressourcenplanungsalgorithmus einen Lastausgleichsalgorithmus umfasst, der Lastausgleichsalgorithmus umfasst:
Anordnen der physischen Maschinen im Cluster in einer Folge basierend auf Lasten der physischen Maschinen in Reaktion darauf, dass ein Lastausgleichsgrad der physischen Maschinen im Cluster kleiner als eine voreingestellte Lastausgleichsschwelle ist;
Auswählen einer physischen Maschine mit der höchsten Last, Durchlaufen des Lastausgleichsgrades der physischen Maschinen im Cluster gemäß den Leistungsdateninformationen, wenn jede virtuelle Maschine auf der physischen Maschine mit der höchsten Last migriert wird, Bestimmen, einer virtuellen Maschine mit einem optimalen Lastausgleichsgrad zum Durchführen von Migrationsmarkierung und Löschen der bestimmten virtuellen Maschine aus der physischen Maschine mit der höchsten Last; und
Berechnen des Lastausgleichsgrades, wenn die virtuelle Maschine mit der Migrationsmarkierung zu jeder von anderen physischen Maschinen migriert wird, und Migrieren der virtuellen Maschine zu einer physischen Maschine mit einem durch die Berechnung erhaltenen optimalen Lastausgleichsgrad,
wobei, falls der Ressourcenplanungsalgorithmus einen Hotspot-Entfernungsalgorithmus umfasst, der Hotspot-Entfernungsalgorithmus umfasst:
Bestimmen, ob eine physische Maschine im Cluster eine physische Hotspot-Maschine ist, gemäß den Leistungsdateninformationen und einer voreingestellten Last-Hotspot-Schwelle; und
Auswählen einer oder mehrerer virtueller Maschinen aus der physischen Hotspot-Maschine und Migrieren der einen oder der mehreren virtuellen Maschinen zu einer anderen physischen Maschine im Cluster, um die Lastschwelle der physischen Hotspot-Maschine zu reduzieren,
wobei, falls der Ressourcenplanungsalgorithmus einen Hotspot-Entfernungsalgorithmus umfasst, der Hotspot-Entfernungsalgorithmus umfasst:
Anordnen der physischen Maschinen im Cluster gemäß den Leistungsdateninformationen in einer Folge basierend auf Lasten der physischen Maschinen;
Bestimmen einer physischen Maschine mit der höchsten Last gemäß den Leistungsdateninformationen als eine physische Hotspot-Maschine, wenn eine CPU-Last der physischen Maschine mit der höchsten Last größer als eine voreingestellte CPU-Last-Hotspot-Schwelle ist oder wenn die Speichernutzungsrate der physischen Maschine mit der höchsten Last größer als eine voreingestellte Speicherlast-Hotspot-Schwelle ist; und
Anordnen von virtuellen Maschinen in der physischen Hotspot-Maschine gemäß den Leistungsdateninformationen einer Folge basierend auf Lasten der virtuellen Maschinen und Migrieren einer virtuellen Maschine mit der höchsten Last nach dem Anordnen zu einer physischen Maschine mit der niedrigsten Last im Cluster.

## Revendications

1. Procédé de réalisation d'une planification de ressources, comprenant les étapes ci-dessous consistant à :
acquérir des informations de paramètres de performance de machines physiques et de machines virtuelles dans une grappe, et analyser les informations de paramètres de performance et les convertir en des informations de données de performance dans un format prédéfini (100), dans lequel les informations de données de performance dans le format prédéfini sont compatibles avec de multiples types de systèmes de planification de ressources ;
déterminer des informations de charge de grappe selon les informations de données de performance (101) ;
sélectionner un algorithme de planification de ressources pour une planification de ressources à partir d'un pool d'algorithmes prédéfini selon les informations de charge de grappe déterminées et une configuration de demande reçue (102) ; et
fournir en sortie une décision de planification de ressources selon l'algorithme de planification de ressources sélectionné, et mettre en oeuvre une planification de ressources sur la grappe selon la décision de planification de ressources fournie en sortie (103) ;
dans lequel le pool d'algorithmes comprend deux algorithmes de planification de ressources ou plus ;
dans lequel l'algorithme de planification de ressources comprend au moins un algorithme parmi un algorithme de suppression de points d'accès, un algorithme d'intégration d'économie d'énergie et un algorithme d'équilibrage de charge ;
dans lequel, dans un cas où l'algorithme de planification de ressources comprend un algorithme d'intégration d'économie d'énergie, l'algorithme d'intégration d'économie d'énergie comprend les étapes ci-dessous consistant à :
en réponse au fait qu'une charge de la grappe est inférieure ou égale à un seuil de charge prédéfini, agencer, selon les informations de charge de grappe, les machines physiques, dans une séquence basée sur des charges des machines physiques, sélectionner un nombre prédéfini de machines physiques présentant les charges les plus faibles dans la séquence, ajouter les machines physiques sélectionnées à une liste de machines physiques devant être mises hors tension, et ajouter des machines physiques non sélectionnées à une liste de machines physiques candidates (200) ; dans lequel la charge comprend : un taux d'utilisation d'unité centrale de traitement, CPU, et/ou un taux d'utilisation de mémoire ;
ajouter toutes les machines virtuelles dans la liste de machines physiques devant être mises hors tension à une liste à migrer (201) ;
pour des machines virtuelles dans la liste à migrer, tenter de placer chaque machine virtuelle de la liste à migrer sur une machine physique présentant la charge la plus élevée dans la liste de machines physiques candidates, une par une (202) ;
en réponse à un placement réussi de la machine virtuelle, fournir en sortie une séquence de décision de migration selon une relation de position de migration, et générer une séquence de décision de mise hors tension selon la liste à migrer (204) ; et
en réponse à un échec de placement de la machine virtuelle, supprimer la machine physique, présentant la charge la plus élevée, de la liste de machines physiques devant être mises hors tension, ajouter la machine physique supprimée à une extrémité de la liste de machines physiques candidates, supprimer une machine virtuelle sur la machine physique ajoutée à la liste de machines physiques candidates, de la liste à migrer, mettre à jour la liste à migrer et un ordonnancement de charges de la liste de machines physiques candidates, et poursuivre une tentative de placement de la machine virtuelle dans la liste à migrer (205).

2. Procédé selon la revendication 1, dans lequel l'étape d'acquisition des informations de paramètres de performance des machines physiques et des machines virtuelles dans la grappe (100) comprend les étapes ci-dessous consistant à :
collecter, par le biais de dispositifs clients de surveillance fournis dans chacune des machines physiques à l'avance, les informations de paramètres de performance des machines physiques et des machines virtuelles ;
acquérir, à partir des dispositifs clients de surveillance et dans le cadre d'une interrogation, les informations de paramètres de performance collectées par les dispositifs clients de surveillance ; et
agréger les informations de paramètres de performance de toutes les machines physiques et de toutes les machines virtuelles acquises dans le cadre de l'interrogation ;
dans lequel les informations de paramètres de performance collectées sont synchronisées dans le cadre d'une multidiffusion parmi les dispositifs clients de surveillance.

3. Procédé selon la revendication 2, dans lequel les informations de paramètres de performance comprennent :
pour chacune des machines physiques : le protocole Internet, IP, l'adresse, le nom, l'identifiant unique, le nombre total d'unités centrales de traitement, CPU, le taux d'utilisation d'unité centrale de traitement, CPU, la taille totale de la mémoire, le taux d'utilisation de mémoire, la vitesse de lecture/écriture d'un port d'entrée/sortie, I/O, d'un disque, et une machine virtuelle fournie sur une machine physique ; dans lequel la machine virtuelle fournie sur une machine physique comprend le nombre et les noms des machines virtuelles fournies ; et
pour chacune des machines virtuelles : le nom, l'identifiant unique, le nombre de mémoires affectées, le taux d'utilisation de mémoire, le nombre d'unités CPU affectées, la vitesse de lecture/écriture d'un port d'entrée/sortie, I/O, d'un disque de la machine virtuelle, une description d'affinité, une description d'exclusion mutuelle et un fanion d'état.

4. Procédé selon la revendication 1, dans lequel le pool d'algorithmes enregistre des algorithmes de planification de ressources respectivement par l'intermédiaire d'interfaces d'extension d'algorithmes fournies à l'avance selon une correspondance biunivoque.

5. Procédé selon l'une quelconque des revendications 1 à 4, dans lequel, dans un cas où l'algorithme de planification de ressources comprend un algorithme d'équilibrage de charge, l'algorithme d'équilibrage de charge comprend les étapes ci-dessous consistant à :
en réponse au fait qu'un degré d'équilibre de charge des machines physiques dans la grappe est inférieur à un seuil d'équilibre de charge prédéfini, agencer les machines physiques dans la grappe dans une séquence basée sur des charges des machines physiques (300) ;
sélectionner une machine physique présentant la charge la plus élevée, franchir, selon les informations de données de performance, le degré d'équilibre de charge des machines physiques dans la grappe lorsque chaque machine virtuelle sur la machine physique présentant la charge la plus élevée est migrée, déterminer une machine virtuelle présentant un degré d'équilibre de charge optimal pour mettre en oeuvre un marquage de migration, et supprimer la machine virtuelle déterminée de la machine physique présentant la charge la plus élevée (301) ; et
calculer le degré d'équilibre de charge lorsque la machine virtuelle avec le marquage de migration est migrée vers chacune des autres machines physiques, et migrer la machine virtuelle vers une machine physique présentant un degré d'équilibre de charge optimal obtenu à l'étape de calcul (302).

6. Procédé selon l'une quelconque des revendications 1 à 4, dans lequel, dans un cas où l'algorithme de planification de ressources comprend un algorithme de suppression de points d'accès, l'algorithme de suppression de points d'accès comprend les étapes ci-dessous consistant à :
déterminer si une machine physique dans la grappe est une machine physique de point d'accès selon les informations de données de performance et un seuil de point d'accès de charge prédéfini (400) ; et
sélectionner une ou plusieurs machines virtuelles à partir de la machine physique de point d'accès et migrer ladite une ou lesdites plusieurs machines virtuelles vers une autre machine physique dans la grappe pour réduire le seuil de charge de la machine physique de point d'accès (401).

7. Procédé selon l'une quelconque des revendications 1 à 4, dans lequel, dans un cas où l'algorithme de planification de ressources comprend un algorithme de suppression de points d'accès, l'algorithme de suppression de points d'accès comprend les étapes ci-dessous consistant à :
agencer, selon les informations de données de performance, les machines physiques dans la grappe dans une séquence basée sur des charges des machines physiques (500) ;
déterminer, selon les informations de données de performance, une machine physique présentant la charge la plus élevée, comme étant une machine physique de point d'accès, lorsque la charge d'unité CPU de la machine physique présentant la charge la plus élevée est supérieure à un seuil de point d'accès de charge d'unité CPU prédéfini, ou lorsque le taux d'utilisation de mémoire de la machine physique présentant la charge la plus élevée est supérieur à un seuil de point d'accès de charge de mémoire prédéfini (501) ; et
agencer, selon les informations de données de performance, des machines virtuelles dans la machine physique de point d'accès dans une séquence basée sur des charges des machines virtuelles, et migrer une machine virtuelle présentant la charge la plus élevée, après l'étape d'agencement, vers une machine physique présentant la charge la plus faible dans la grappe (502).

8. Dispositif pour réaliser une planification de ressources, comprenant : une unité d'acquisition et d'analyse (601), une unité de détermination (602), une unité de sélection (603) et une unité de planification et de fourniture en sortie (604) ; dans lequel :
l'unité d'acquisition et d'analyse (601) est configurée de manière à acquérir des informations de paramètres de performance de machines physiques et de machines virtuelles dans une grappe, et à analyser les informations de paramètres de performance et les convertir en des informations de données de performance dans un format prédéfini, dans lequel les informations de données de performance dans le format prédéfini sont compatibles avec de multiples types de systèmes de planification de ressources ;
l'unité de détermination (602) est configurée de manière à déterminer des informations de charge de grappe selon les informations de données de performance ;
l'unité de sélection (603) est configurée de manière à sélectionner un algorithme de planification de ressources pour une planification de ressources à partir d'un pool d'algorithmes prédéfini selon les informations de charge de grappe déterminées et une configuration de demande reçue ; et
l'unité de planification et de fourniture en sortie (604) est configurée de manière à fournir en sortie une décision de planification de ressources selon l'algorithme de planification de ressources sélectionné, et à mettre en oeuvre une planification de ressources sur la grappe selon la décision de planification de ressources fournie en sortie ;
dans lequel le pool d'algorithmes comprend deux algorithmes de planification de ressources ou plus ;
dans lequel l'algorithme de planification de ressources comprend au moins un algorithme parmi un algorithme de suppression de points d'accès, un algorithme d'intégration d'économie d'énergie et un algorithme d'équilibrage de charge ;
dans lequel, dans un cas où l'algorithme de planification de ressources comprend un algorithme d'intégration d'économie d'énergie, l'algorithme d'intégration d'économie d'énergie comprend les étapes ci-dessous consistant à :
en réponse au fait qu'une charge de la grappe est inférieure ou égale à un seuil de charge prédéfini, agencer, selon les informations de charge de grappe, les machines physiques, dans une séquence basée sur des charges des machines physiques, sélectionner un nombre prédéfini de machines physiques présentant les charges les plus faibles dans la séquence, ajouter les machines physiques sélectionnées à une liste de machines physiques devant être mises hors tension, et ajouter des machines physiques non sélectionnées à une liste de machines physiques candidates ; dans lequel la charge comprend : un taux d'utilisation d'unité centrale de traitement, CPU, et/ou un taux d'utilisation de mémoire ;
ajouter toutes les machines virtuelles dans la liste de machines physiques devant être mises hors tension à une liste à migrer ;
pour des machines virtuelles dans la liste à migrer, tenter de placer chaque machine virtuelle de la liste à migrer sur une machine physique présentant la charge la plus élevée dans la liste de machines physiques candidates, une par une ;
en réponse à un placement réussi de la machine virtuelle, fournir en sortie une séquence de décision de migration selon une relation de position de migration, et générer une séquence de décision de mise hors tension selon la liste à migrer ; et
en réponse à un échec de placement de la machine virtuelle, supprimer la machine physique, présentant la charge la plus élevée, de la liste de machines physiques devant être mises hors tension, ajouter la machine physique supprimée à une extrémité de la liste de machines physiques candidates, supprimer une machine virtuelle sur la machine physique ajoutée à la liste de machines physiques candidates, de la liste à migrer, mettre à jour la liste à migrer et un ordonnancement de charges de la liste de machines physiques candidates, et poursuivre une tentative de placement de la machine virtuelle dans la liste à migrer.

9. Dispositif selon la revendication 8, dans lequel l'unité d'acquisition et d'analyse (601) est configurée de manière à :
collecter, par le biais de dispositifs clients de surveillance fournis dans chacune des machines physiques à l'avance, les informations de paramètres de performance des machines physiques et des machines virtuelles ;
acquérir, à partir des dispositifs clients de surveillance et dans le cadre d'une interrogation, les informations de paramètres de performance collectées par les dispositifs clients de surveillance ; et
agréger les informations de paramètres de performance de toutes les machines physiques et de toutes les machines virtuelles acquises dans le cadre de l'interrogation ;
analyser les informations de paramètres de performance agrégées, et les convertir en des informations de données de performance dans un format prédéfini ;
dans lequel les informations de paramètres de performance collectées sont synchronisées dans le cadre d'une multidiffusion parmi les dispositifs clients de surveillance.

10. Dispositif selon la revendication 9, dans lequel les informations de paramètres de performance comprennent :
pour chacune des machines physiques : le protocole Internet, IP, l'adresse, le nom, l'identifiant unique, le nombre total d'unités centrales de traitement, CPU, le taux d'utilisation d'unité centrale de traitement, CPU, la taille totale de la mémoire, le taux d'utilisation de mémoire, la vitesse de lecture/écriture d'un port d'entrée/sortie, I/O, d'un disque, et une machine virtuelle fournie sur une machine physique ; dans lequel la machine virtuelle fournie sur une machine physique comprend le nombre et les noms des machines virtuelles fournies ; et
pour chacune des machines virtuelles : le nom, l'identifiant unique, le nombre de mémoires affectées, le taux d'utilisation de mémoire, le nombre d'unités CPU affectées, la vitesse de lecture/écriture d'un port d'entrée/sortie, I/O, d'un disque de la machine virtuelle, une description d'affinité, une description d'exclusion mutuelle et un fanion d'état.

11. Dispositif selon la revendication 8, comprenant en outre :
une unité d'enregistrement configurée de manière à enregistrer des algorithmes de planification de ressources, respectivement, par le biais d'interfaces d'extension d'algorithmes fournies à l'avance selon une correspondance biunivoque.

12. Dispositif selon l'une quelconque des revendications 8 à 11, dans lequel, dans un cas où l'algorithme de planification de ressources comprend un algorithme d'équilibrage de charge, l'algorithme d'équilibrage de charge comprend les étapes ci-dessous consistant à :
en réponse au fait qu'un degré d'équilibre de charge des machines physiques dans la grappe est inférieur à un seuil d'équilibre de charge prédéfini, agencer les machines physiques dans la grappe dans une séquence basée sur des charges des machines physiques ;
sélectionner une machine physique présentant la charge la plus élevée, franchir, selon les informations de données de performance, le degré d'équilibre de charge des machines physiques dans la grappe lorsque chaque machine virtuelle sur la machine physique présentant la charge la plus élevée est migrée, déterminer une machine virtuelle présentant un degré d'équilibre de charge optimal pour mettre en oeuvre un marquage de migration, et supprimer la machine virtuelle déterminée de la machine physique présentant la charge la plus élevée ; et
calculer le degré d'équilibre de charge lorsque la machine virtuelle avec le marquage de migration est migrée vers chacune des autres machines physiques, et migrer la machine virtuelle vers une machine physique présentant un degré d'équilibre de charge optimal obtenu à l'étape de calcul ;
dans lequel, dans un cas où l'algorithme de planification de ressources comprend un algorithme de suppression de points d'accès, l'algorithme de suppression de points d'accès comprend les étapes ci-dessous consistant à :
déterminer si une machine physique dans la grappe est une machine physique de point d'accès selon les informations de données de performance et un seuil de point d'accès de charge prédéfini ; et
sélectionner une ou plusieurs machines virtuelles à partir de la machine physique de point d'accès et migrer ladite une ou lesdites plusieurs machines virtuelles vers une autre machine physique dans la grappe pour réduire le seuil de charge de la machine physique de point d'accès ;
dans lequel, dans un cas où l'algorithme de planification de ressources comprend un algorithme de suppression de points d'accès, l'algorithme de suppression de points d'accès comprend les étapes ci-dessous consistant à :
agencer, selon les informations de données de performance, les machines physiques dans la grappe dans une séquence basée sur des charges des machines physiques ;
déterminer, selon les informations de données de performance, une machine physique présentant la charge la plus élevée, comme étant une machine physique de point d'accès, lorsque la charge d'unité CPU de la machine physique présentant la charge la plus élevée est supérieure à un seuil de point d'accès de charge d'unité CPU prédéfini, ou lorsque le taux d'utilisation de mémoire de la machine physique présentant la charge la plus élevée est supérieur à un seuil de point d'accès de charge de mémoire prédéfini ; et
agencer, selon les informations de données de performance, des machines virtuelles dans la machine physique de point d'accès, dans une séquence basée sur des charges des machines virtuelles, et migrer une machine virtuelle présentant la charge la plus élevée, après l'étape d'agencement, vers une machine physique présentant la charge la plus faible dans la grappe.
